# DEMANDE DE BREVET EUROPEEN

(11) **EP 1 191 791 A1**
(43) Date de publication de la demande: **27.03.2002**
(21) Numéro de dépôt: 01402420.2
(22) Date de dépôt: 20.09.2001
(51) Int. Cl.: H04N 5/775

(54) **Procédé de navigation dans un flux vidéo et décodeur de télévision associé**

(30) Priorité: 21.09.2000 FR 0012061
(71) Demandeur: SAGEM S.A., 75015 Paris (FR)
(72) Inventeur: Le Borgne, Yves, 78260 Acheres (FR)
(74) Mandataire: Schmit, Christian Norbert Marie

(57) **Abrégé**

Pour permettre à un utilisateur d'un décodeur (1) de télévision de naviguer à travers un flux vidéo reçu et codé selon la norme MPEG2, on procède à une première phase d'identification de toutes les images présentes dans le flux reçu, chaque image étant alors associée à un index (I1 à IN) mémorisé dans une mémoire (9) de sauvegarde. Puis, lors de la visualisation de ce flux, on affiche sur un écran (6) d'un téléviseur (4) relié au décodeur un cartouche (32) de navigation faisant notamment apparaître une règle (34) munie d'index correspondant chacun à une image ainsi localisée dans le flux vidéo. Le cartouche sert alors d'interface à un utilisateur afin que ce dernier puisse sélectionner une position dans le flux et visualiser l'image correspondante.

## Description

La présente invention a pour objet un procédé de navigation dans un flux vidéo. Elle a aussi pour objet un décodeur de télévision associé. Elle s'applique principalement au domaine des décodeurs de télévision. Le but de l'invention est de permettre à un utilisateur de naviguer dans un flux de télévision ou encore événement, cet événement étant mémorisé sous un format MPEG2. On entend par navigation le lancement et/ou l'arrêt de la visualisation de l'événement. II peut s'agir aussi d'une action de pause c'est-à-dire d'un arrêt sur image. Cela concerne aussi une avance et/ou un retour à une vitesse variable avec visualisation. La navigation s'entend aussi des actions de positionnement dans l'événement.

Les décodeurs de télévision actuels ne permettent pas de naviguer dans un tel flux vidéo. En effet, ce flux vidéo est compressé selon la norme MPEG2.

La présente invention permet de résoudre ce problème en proposant un procédé de navigation dans un flux vidéo compressé. Ainsi l'invention permet, après avoir enregistré un événement audiovisuel dans une mémoire de sauvegarde, de visualiser cet événement et de naviguer selon la définition donnée précédemment.

L'invention a donc pour objet un procédé de gestion d'un affichage d'un flux vidéo sur un écran de télévision, ce flux vidéo étant reçu compressé selon un codage MPEG dans un décodeur de télévision caractérisé en ce que :
- on enregistre le flux vidéo compressé dans une mémoire de sauvegarde,
- on recherche dans le flux reçu toutes les séquences d'image présentes dans ce flux,
- on produit une table d'indexation comportant une liste d'index, un index permettant de localiser une séquence d'image dans le flux enregistré.

Elle concerne aussi un décodeur de télévision recevant un flux vidéo MPEG à visualiser caractérisé en ce qu'il comporte un moyen d'indexation de chaque image présente dans le flux, chaque index étant placé dans une table d'indexation mémorisée dans une mémoire de sauvegarde.

L'invention sera mieux comprise à la lecture de la description qui suit et à l'examen de la figure qui l'accompagne. Celle-ci n'est présentée qu'à titre indicatif et nullement limitatif de l'invention. La figure montre :

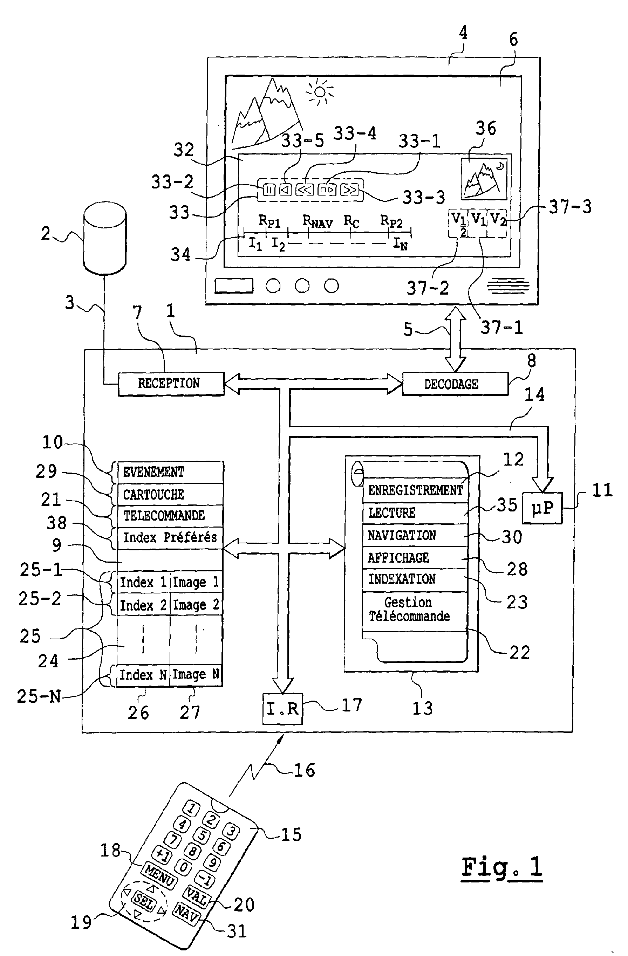

- Figure 1: un exemple d'architecture simplifiée du décodeur de l'invention.

La figure 1 montre un décodeur 1 selon l'invention. Ce décodeur 1 est relié d'une part à une base de données 2 d'un opérateur par une liaison 3. Cette liaison 3 est généralement une liaison de type coaxiale mais pourrait très bien être d'un autre genre tel qu'une fibre optique par exemple. Le décodeur 1 est relié d'autre part à un téléviseur 4 par une liaison 5. Généralement, cette liaison 5 est une liaison dite péritel, c'est à dire qu'elle permet de transmettre des signaux en bande de base.

Le décodeur reçoit ainsi de la base de données 2 un flux vidéo à visualiser sur un écran 6 du téléviseur 4. Pour cela, le décodeur 1 comporte un dispositif 7 de réception et un dispositif 8 de décodage. Le flux vidéo reçu dans le décodeur 1 est un signal compressé selon la norme de compression MPEG2. Plus précisément, il s'agit généralement de la version deux de cette norme que l'on nomme MPEG2. Ainsi, le dispositif 8 a en charge de décompresser le flux vidéo reçu en un signal vidéo selon un format compréhensible par le téléviseur 4.

Dans l'invention, le flux vidéo reçu est enregistré, sous sa forme compressée, dans une mémoire 9 de sauvegarde à un emplacement 10. Pour permettre cet enregistrement, le décodeur 1 comporte en outre un microprocesseur 11 commandé par un programme 12 d'enregistrement dans une mémoire 13 de programme, les différents éléments du décodeur 1 étant reliés en outre par un bus 14 de données, d'adresses, et de commande.

D'une manière préférée, le programme 12 est activé par un utilisateur du décodeur 1 à l'aide d'un pupitre de commande tel qu'une télécommande 15 par exemple. Ce pupitre peut aussi être un clavier, non représenté sur la figure 1, présent sur une façade du décodeur 1. La télécommande 15 émet généralement un signal 16 de type infrarouge. Le décodeur 1 comporte en conséquence un récepteur 17 infrarouge permettant de recevoir le signal 16. Ainsi, la télécommande 15 permet d'ouvrir sur l'écran 6 un menu déroulant afin de sélectionner et d'activer la fonction enregistrement. Pour activer cette fonction d'enregistrement, la télécommande 15 comporte notamment une touche 18 d'accès à un menu. Elle comporte encore un groupe 19 de touches de sélection et de déplacement dans le menu ainsi qu'une touche 20 de validation d'un choix dans le menu. Une association entre une touche de la télécommande 15 et une fonction associée est sauvegardée à un emplacement 21 de la mémoire 9. Cette association est gérée par un programme 22 de gestion de la télécommande 15, ce programme 22 étant placé dans la mémoire 13.

Selon une caractéristique essentielle de l'invention, la mémoire 13 comporte un moyen 23 d'indexation. Ce moyen 23, présent sous la forme d'un programme 23 de la mémoire 13, permet tout d'abord de rechercher dans le flux reçu et enregistré à l'emplacement 10 sous la forme d'un événement à visualiser, toutes les séquences d'images présentes dans ce flux. En effet, un flux MPEG est une succession d'images fixes, le dispositif 8 ayant à charge notamment de retrouver par interpolation les images, entre deux images successives du flux compressé, qui ont été supprimées lors de la phase de compression par l'opérateur. Ainsi, chaque image identifiée dans le flux vidéo est localisée par un index. Le programme 23 permet ainsi de produire une table 24 d'indexation à un emplacement 25, cette table étant sauvegardée dans la mémoire 9 par exemple. Ainsi, la table 24 permet de localiser une séquence d'images dans le flux enregistré à l'emplacement 10.

Dans un exemple, la table 24 peut être constituée par un ensemble de lignes 25-1 à 25-N, chaque ligne étant relative à un index I1 à IN. Une ligne peut aussi être constituée de deux champs 26 et 27 par exemple. Le champ 26 comporte alors la valeur d'un index et le champ 27 comporte quant à lui un identifiant de l'index ou un mot clé. On peut noter que le champ 27 est tout à fait facultatif. En effet, le fait de disposer de la liste des index de toutes les séquences d'images du flux enregistré à l'emplacement 10 peut suffire. En conséquence, chaque séquence d'image du flux reçu et enregistré dans la mémoire 9 est individuellement accessible pour être affichée à l'écran 6 du téléviseur 4.

Selon une réalisation préférée de l'invention, le décodeur 1 comporte un moyen 28 d'affichage à l'écran 6 d'un cartouche de navigation. Les paramètres d'affichage de ce cartouche sont sauvegardés à un emplacement 29 de la mémoire 9 par exemple. Ce moyen 28 peut prendre la forme d'un programme 28 géré par un programme 30 de navigation activé notamment à l'aide de la télécommande 15. La télécommande 15 comporte en effet, dans un exemple préféré, une touche 31 de raccourci permettant d'activer le programme 30. Toutefois, le menu accessible à partir de la touche 18 de la télécommande 15 peut lui aussi permettre d'accéder à la fonction de navigation avec l'aide du groupe 19 et de la touche 20 notamment.

Selon un fonctionnement préféré de l'invention, une activation du programme 30 à l'aide de la touche 31 aboutit à l'activation du programme 28. Ce programme 28 commande donc le microprocesseur 11 afin de récupérer à l'emplacement 29 de la mémoire 9 les paramètres du cartouche de navigation et de les transmettre au téléviseur 4. Le téléviseur 4 affiche alors sur l'écran 6 un cartouche 32 de navigation. Dans un affichage le plus simple possible, le cartouche 32 comporte un groupe de touches imprimées accessibles à partir de la télécommande 15 par exemple. Ce groupe 33 comporte dans un exemple une touche 33-1 de lecture et d'arrêt, une touche 33-2 de pause, une touche 33-3 d'avance rapide et une touche 33-4 de retour rapide. Le cartouche 32 comporte en outre une règle 34 graduée, chaque graduation étant associée à un index de la table 24.

Dans un exemple préféré, la fonction de navigation est activée pendant la lecture à l'écran 6 de l'événement mémorisé à l'emplacement 10. Pour cela la mémoire 13 comporte en plus un programme 35 de lecture d'un flux vidéo, ce flux vidéo étant lu directement à partir de la sortie du dispositif 7 ou à partir de la mémoire 9. Ainsi, selon un fonctionnement préféré du procédé de l'invention, l'appui sur la touche 31 de navigation a pour conséquence de figer l'image présente à l'écran 6 et de faire apparaître le cartouche 32 sur ce même écran. Dans un exemple préféré le cartouche 32 est affiché, à l'aide du programme 28, en surimpression. Selon ce fonctionnement préféré, la règle 34 comporte deux repères mobiles R_{NAV} et R_{C} pour repère de navigation et repère courant respectivement. Le repère courant permet de localiser la séquence d'images associé à l'image figée à l'écran 6 et le repère R_{NAV} permet de sélectionner la séquence d'images qu'on souhaite visualiser ou la séquence d'images où on souhaite se positionner.

Dans une variante préférée de l'invention le cartouche 32 comporte une fenêtre 36 de prévisualisation permettant de visualiser la séquence d'image marquée à l'aide du repère R_{NAV}. L'activation d'une touche 33-1 à 33-4 ou le marquage de la règle par le repère R_{NAV} sont réalisés de manière préférée à l'aide de la télécommande 15 et notamment du groupe 19. Le groupe 19 permet, dans un exemple de réalisation, de déplacer à l'intérieur du cartouche une zone active et de valider l'action associée à l'emplacement sélectionné par cette zone active, c'est-à-dire sur une des touches 33-1 à 33-4 ou sur un index à marquer. Une fois l'index souhaité marqué, on sélectionne l'une des touches 33-1 à 33-4. Par exemple, on sélectionne la touche 33-1 de marche/arrêt. Cela a pour effet de se placer dans l'événement à visualiser à l'endroit marqué par le repère R_{NAV} et de commencer la lecture à partir de ce repère. La lecture peut se faire soit dans la fenêtre 36 de prévisualisation, soit à l'écran 6 directement.

Dans une variante, l'image repérée par l'index marqué et donc présente dans la fenêtre 36 est affichée à l'écran 6. Cela peut être autorisé notamment à l'aide de la touche 20 de validation de la télécommande 15. Ainsi, un premier appui sur cette touche 20 permet d'afficher cette image à l'écran 6 en masquant le cartouche 32 et un deuxième appui permet de restituer le cartouche 36. Toutefois, dans une autre variante, on peut laisser le cartouche 32 affiché tant que le programme 30 de navigation est actif.

Dans une variante de réalisation, un nombre d'index présents sur la règle 34 et donc dans la table 24 est variable, c'est-à-dire qu'on sélectionne à la demande une longueur de la table 24. On peut sélectionner un nombre d'index présents dans la table 24 à l'aide d'une fonction de gestion de cette table 24 accessible à partir du menu proposé par la touche 18 par exemple. Cependant, on règle à la demande seulement un nombre d'index accessible à partir du cartouche 32, c'est-à-dire un nombre d'index présents sur la règle 34. En effet, cela permet de limiter un nombre d'index présents sur la règle 32 afin de ne pas surcharger celle-ci. Cette variante permet en fait de faire un zoom d'une partie de la règle 34. Il suffit pour cela de sélectionner un nombre d'index à afficher sur la règle 34 et ce, avant et après le repère courant R_{c}.

Dans une autre variante, on produit la table d'indexation en sautant des images à partir d'une image de référence par exemple la première image détectée dans le flux reçu. En effet, si le cartouche est utilisé seulement pour se recaler à peu près à une certaine position dans l'événement enregistré alors il n'y a pas besoin de retenir tous les index associés à cet événement. En effet, une différence entre deux images successives n'est pas trop importante puisque ces deux images sont utilisées pour retrouver, par interpolation, toutes les images intermédiaires.

Selon un exemple de réalisation de l'invention, le cartouche 32 comporte des touches 37-1, 37-2 et 37-3 de réglage d'une vitesse d'affichage du flux mémorisé à l'emplacement 10 et ce, à partir du repère R_{NAV} sélectionné. La touche 37-1 permet de sélectionner par exemple la vitesse normale de défilement d'une image à l'écran, la touche 37-2 permet par exemple de sélectionner une vitesse égale à la moitié de la vitesse normale et la touche 37-3 permet par exemple de sélectionner une vitesse deux fois plus rapide que la vitesse normale. On pourrait très bien envisager de choisir d'autres vitesses ou d'augmenter le choix des vitesses voire de remplir un champ du cartouche 32 avec une valeur de vitesse souhaitée. Un moyen spécifique aurait alors en charge de régler l'affichage à cette vitesse ou de choisir une vitesse la plus proche parmi une liste de choix. Les touches 37-1 à 37-3 sont associées avec la touche 33-1 de marche/arrêt. La touche 33-3 correspond à la touche d'avance rapide par rapport à une vitesse normale de lecture. De même la touche 33-4 correspond à une touche de retour rapide par rapport à la vitesse normale de lecture.

Dans une variante, le cartouche 32 comporte une touche 33-5 de lecture dans un sens opposé au sens donné par la touche 33-1. Ainsi, avec le procédé de l'invention on sélectionne un sens de lecture à partir de l'index R_{NAV} sélectionné. Toutefois, et ce, à cause du codage MPEG, lorsque la touche 33-5 est sélectionnée, la lecture n'est pas une lecture continue mais une lecture image par image dans le sens des index décroissants c'est-à-dire correspondant à un retour en arrière. Cela est dû au codage MPEG qui ne permet pas une lecture normale en sens inverse.

Dans un exemple préféré, on produit une liste d'index préférés, cette liste étant sauvegardée dans la mémoire 9 à un emplacement 38. Une liste d'index préférés est associée à un événement mémorisé dans la mémoire 9, par exemple celui de l'emplacement 10. Ainsi, lors de la visualisation de cet événement mémorisé et après un appel à la fonction de navigation le programme 28 qui a en charge l'affichage du cartouche 32 prend connaissance de la liste d'index préférés associés à cet événement affiché. Le programme 28 commande alors une disposition de ces index préférés sur la règle 34 sous la forme de repères préférés R_{P1} et R_{P2} dans un exemple où l'événement considéré comporte deux index préférés. Ainsi, on peut caler le flux mémorisé sur l'un de ces index préférés soit en sélectionnant directement le repère préféré correspondant soit en plaçant le repère R_{NAV} à l'un de ces emplacements.

## Revendications

1. Procédé de gestion d'un affichage d'un flux vidéo sur un écran (6) de télévision, ce flux vidéo étant reçu compressé selon un codage MPEG dans un décodeur (1) de télévision **caractérisé en ce que** :
- on enregistre le flux vidéo compressé dans une mémoire (9) de sauvegarde,
- on recherche dans le flux reçu toutes les séquences d'image présentes dans ce flux,
- on produit une table (24) d'indexation comportant une liste d'index, un index (I1-IN) permettant de localiser une séquence d'image dans le flux enregistré.

2. Procédé selon la revendication 1 **caractérisé en ce que** :
- on produit un cartouche (32) de navigation, associé à un pupitre de commande (15), permettant de sélectionner une séquence d'image à partir de la table d'index, le cartouche étant affiché à l'écran.

3. Procédé selon la revendication 2 **caractérisé en ce que** :
- on affiche en surimpression le cartouche.

4. Procédé selon la revendication 3 **caractérisé en ce que** :
- on munit le cartouche d'une fenêtre (36) de prévisualisation de l'image associée à l'index sélectionné.

5. Procédé selon l'une des revendications 2 à 4 **caractérisé en ce que** :
- on sélectionne à la demande une longueur de la table d'indexation.

6. Procédé selon l'une des revendications 2 à 5 **caractérisé en ce que** :
- on règle à la demande un nombre d'index accessible à partir du cartouche.

7. Procédé selon l'une des revendications 2 à 6 **caractérisé en ce que** :
- on produit la table d'indexation en sautant des images à partir d'une image de référence.

8. Procédé selon l'une des revendications 1 à 7 **caractérisé en ce que** :
- on règle une vitesse de lecture du flux mémorisé à partir d'un index sélectionné.

9. Procédé selon l'une des revendications 1 à 8 **caractérisé en ce que** :
- on produit, pour un flux enregistré, une liste d'index préférés, la liste étant mémorisée dans une mémoire de sauvegarde.

10. Procédé selon l'une des revendications 1 à 9 **caractérisé en ce que** :
- on sélectionne un sens de lecture à partir d'un index sélectionné.

11. Décodeur de télévision recevant un flux vidéo MPEG à visualiser **caractérisé en ce qu'**il comporte un moyen (23) d'indexation de chaque image présente dans le flux, chaque index étant placé dans une table (24) d'indexation mémorisée dans une mémoire (9) de sauvegarde.

12. Décodeur selon la revendication 11 **caractérisé en ce qu'**il comporte un moyen (30) de navigation dans le flux en utilisant la table d'indexation.
